# DEMANDE DE BREVET EUROPEEN

(11) **EP 3 989 383 A1**
(43) Date de publication de la demande: **27.04.2022**
(21) Numéro de dépôt: 21204415.0
(22) Date de dépôt: 25.10.2021
(51) Int. Cl.: H02J 3/38, G06Q 50/06, G06F 30/00

(54) **PROCÉDÉ DE CARACTÉRISATION D'UN SYSTÈME ÉNERGÉTIQUE ALIMENTÉ PAR AU MOINS UNE SOURCE D'ÉNERGIE RENOUVELABLE**

(30) Priorité: 23.10.2020 FR 2010921
(71) Demandeur: Energy Observer Developments, 35400 Saint-Malo (FR)
(72) Inventeur: BORNAND, Bastien, 1007 Lausanne (CH); GUEX, Arthur, 1400 Yverdon-les-Bains (CH)
(74) Mandataire: Regimbeau

(57) **Abrégé**

Procédé de caractérisation d'un système énergétique alimenté par au moins une source d'énergie renouvelable comprenant la mise en œuvre par des moyens de traitement de données d'étapes de :
(a) réception d'une valeur d'au moins une grandeur de consommation caractérisant un apport énergétique dudit environnement au système énergétique, et d'une valeur d'au moins une grandeur de production caractérisant un service fourni par le système énergétique ; un ensemble de données relatives à des systèmes énergétiques de référence étant stocké dans une base de données de référence stockée dans des moyens de stockage de données ;
(b) pour chaque système énergétique de référence, détermination d'une série temporelle représentant l'évolution sur un intervalle de temps d'une grandeur intermédiaire caractérisant une consommation ou une production du système énergétique de référence ;
(c) pour chaque système énergétique de référence, optimisation d'un indicateur de performance ;
(d) détermination du système énergétique de référence optimal dans ledit environnement donné en fonction des indicateurs de performance optimisés pour chaque système énergétique de référence ; et
(e) restitution sur une interface de caractéristiques associées au système énergétique de référence déterminé comme optimal.

## Description

### DOMAINE TECHNIQUE GENERAL

La présente invention concerne un procédé de caractérisation d'un système énergétique alimenté par une source d'énergie renouvelable.

### ETAT DE L'ART

Les considérations environnementales mettent actuellement de plus en plus en avant l'utilisation des sources d'énergie dites renouvelables telles que l'énergie solaire, l'énergie éolienne, l'énergie marémotrice, etc.

L'alimentation, et notamment l'alimentation électrique d'un système énergétique par une telle source peut poser un certain nombre de difficultés.

Par système énergétique on entendra tout système qui est alimenté électriquement pour fournir au sein d'un site géographiquement défini un ou plusieurs services. Le système énergétique comprend une ou plusieurs installations de conversion énergétique, chaque installation assurant une alimentation électrique ou énergétique du système ou bien la fourniture d'un des services comme par exemple le chauffage d'un bâtiment, la distribution de dihydrogène couvrant notamment la production et le stockage de dihydrogène, la recharge de batteries, le fonctionnement des appareils électriques du site, l'approvisionnement en eau, etc.

En premier lieu, la production d'électricité par une source d'énergie renouvelable suit un profil au cours du temps qui dépend des conditions environnementales (ensoleillement, force du vent, rythme des marées, etc.). Le profil de production électrique ne suit pas nécessairement le profil de consommation d'électricité du système énergétique que l'on souhaite alimenter par la source d'énergie renouvelable. Le décalage entre le profil de production et le profil de consommation peut rendre nécessaire une alimentation électrique supplémentaire par le réseau électrique national ou un système de stockage de l'énergie électrique reçue dans des batteries ou sous forme de dihydrogène.

Cette alimentation électrique supplémentaire peut entraîner d'une part un coût supplémentaire et d'autre part l'augmentation du bilan carbone du système énergétique.

Les différentes grandeurs physiques que représentent la consommation électrique du système, la production électrique des différentes sources locales d'énergie renouvelable et le recours à une alimentation électrique supplémentaire sont complexes et interdépendantes. En particulier l'évolution de production d'électricité par une source d'énergie renouvelable peut présenter des variabilités différentes à l'échelle d'une journée et à l'échelle d'une année.

Si de plus le système énergétique produit du dihydrogène, destiné par exemple à l'alimentation d'une flotte de véhicules, que la flotte soit captive ou non, il devient nécessaire de prendre en compte la variabilité de l'alimentation en dihydrogène à l'échelle d'une journée et à l'échelle d'une année.

Dans ces conditions, l'estimation du coût économique et environnemental du système énergétique nécessite de prendre en compte un très grand volume de données.

L'utilisation d'algorithmes de traitement automatisé de l'information permet une gestion simultanée de nombreux paramètres. Si ces outils offrent des résultats intéressants, ils restent cependant insuffisants pour estimer de manière fine le coût économique et environnemental du système énergétique, en particulier lorsque le système énergétique est adapté pour produire du dihydrogène.

Il existe donc un besoin pour un procédé de caractérisation de système énergétique alimenté par une source d'énergie renouvelable permettant d'identifier des choix de design du système en fonction des sources d'énergie renouvelables locales et de leur capacité d'alimentation électrique.

### PRESENTATION DE L'INVENTION

L'invention propose selon un premier aspect un procédé de caractérisation d'un système énergétique alimenté par au moins une source d'énergie renouvelable et destiné à fonctionner dans un environnement donné comprenant la mise en œuvre par des moyens de traitement de données d'étapes de :
(a) réception d'une valeur d'au moins une grandeur de consommation caractérisant un apport énergétique dudit environnement au système énergétique, et d'une valeur d'au moins une grandeur de production caractérisant un service fourni par le système énergétique ; un ensemble de données relatives à des systèmes énergétiques de référence étant stocké dans une base de données de référence stockée dans des moyens de stockage de données, chaque système énergétique de référence étant défini par un modèle permettant de calculer un indicateur de performance du système énergétique de référence en fonction des valeurs reçues de l'au moins une grandeur de consommation et de l'au moins une grandeur de production ;
(b) pour chaque système énergétique de référence, détermination d'une série temporelle représentant l'évolution sur un intervalle de temps d'une grandeur intermédiaire caractérisant une consommation ou une production du système énergétique de référence en fonction d'une des valeurs reçues et dudit modèle associé au système énergétique de référence ;
(c) pour chaque système énergétique de référence, optimisation d'un indicateur de performance en fonction des valeurs reçues, dudit modèle associé au système énergétique de référence et de la série temporelle représentant l'évolution sur un intervalle de temps de la grandeur intermédiaire;
(d) détermination du système énergétique de référence optimal dans ledit environnement donné en fonction des indicateurs de performance optimisés pour chaque système énergétique de référence ; et
(e) restitution sur une interface de caractéristiques associées au système énergétique de référence déterminé comme optimal.

Le procédé selon l'invention est avantageusement complété par les caractéristiques suivantes, prises seules ou en une quelconque de leur combinaison techniquement possible :
- chaque série temporelle représente une évolution horaire sur un intervalle d'une année ;
- le calcul de l'indicateur de performance comprend la détermination d'une pluralité de séries temporelles synchronisées représentant l'évolution sur l'intervalle de temps d'une consommation électrique et d'une production du système énergétique de référence ;
- l'indicateur de performance est choisi parmi l'un au moins des indicateurs suivants : un coût économique du système énergétique, une quantité annuelle de gaz à effet de serre émis par le système énergétique, une consommation d'énergie primaire par le système énergétique ;
- le système énergétique comprend une station de production de dihydrogène ;
- les caractéristiques associées au système énergétique de référence déterminé comme optimal comprennent une série temporelle représentant l'évolution sur l'intervalle de temps de la production de dihydrogène et une série temporelle représentant l'évolution sur l'intervalle de temps du stockage de dihydrogène ;
- le système fournit un service de distribution de dihydrogène à une flotte de véhicules, le modèle du système énergétique de référence déterminé comme optimal permettant de déterminer la série temporelle représentant l'évolution sur l'intervalle de temps de la production de dihydrogène et une série temporelle représentant l'évolution sur l'intervalle de temps du stockage de dihydrogène à partir d'un nombre de véhicules et d'une nature des véhicules ou à partir d'une taille d'une agglomération proche du système énergétique, d'une taille d'une zone urbaine à laquelle appartient le système énergétique ou d'une taille d'une flotte de véhicules associés à un service collectif dans l'agglomération ou dans la zone.

Selon un autre aspect, l'invention concerne également un équipement pour la caractérisation d'un système énergétique alimenté par au moins une source d'énergie renouvelable et destiné à fonctionner dans un environnement donné comprenant :
- une interface ; et
- des moyens de traitement de données comprenant :
   un module de réception depuis l'interface d'une valeur d'au moins une grandeur de consommation caractérisant un apport énergétique dudit environnement au système énergétique, et d'une valeur d'au moins une grandeur de production caractérisant un service fourni par le système énergétique ; un ensemble de données relatives à des systèmes énergétiques de référence étant stocké dans une base de données de référence stockée dans des moyens de stockage de données, chaque système énergétique de référence étant défini par un modèle permettant de calculer un indicateur de performance du système énergétique de référence en fonction d'au moins une des valeurs reçues
   un module de calcul dudit indicateur de performance en fonction des valeurs reçues et dudit modèle associé au système énergétique de référence, le calcul comprenant la détermination d'une série temporelle représentant l'évolution sur un intervalle de temps d'une grandeur intermédiaire caractérisant une consommation ou une production du système énergétique de référence en fonction d'une des valeurs reçues et dudit modèle associé au système énergétique de référence ;
   un module de détermination du système énergétique de référence optimal dans ledit environnement donné en fonction des indicateurs de performance calculés pour chaque système énergétique de référence ; et
   un module de restitution sur une interface de caractéristiques associées audit système énergétique de référence déterminé comme optimal.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- [Fig. 1] la figure 1 est un schéma du système énergétique dans son environnement ;
- [Fig. 2] la figure 2 représente un équipement pour la mise en œuvre du procédé de caractérisation d'un système énergétique selon l'invention ;

### DESCRIPTION DETAILLEE

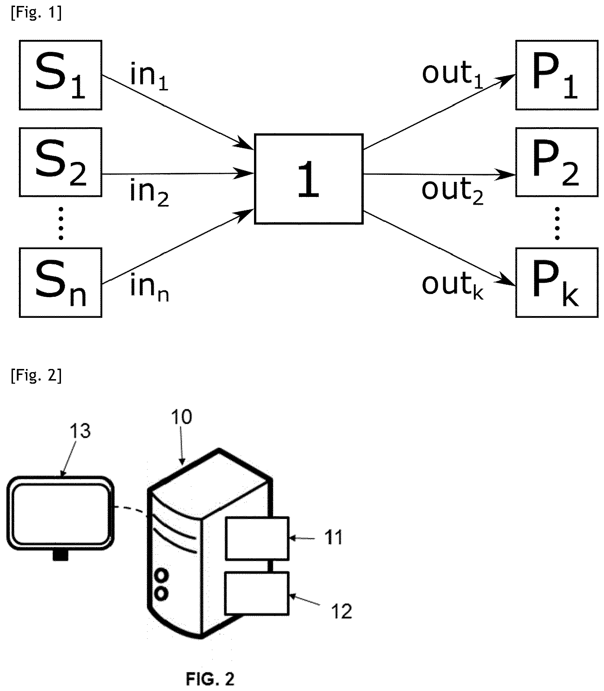

L'invention propose une caractérisation d'un système énergétique destiné à fonctionner dans un environnement donné. La figure 1 représente le système énergétique 1 dans son environnement.

Par caractérisation on entendra la définition d'un design du système énergétique et l'optimisation de ses performances. Cette caractérisation comprend d'une part le choix des technologies des différentes installations de conversion énergétique qui composent le système, le dimensionnement ou la puissance maximale développée dans chacune de ces installations, et l'identification d'un profil temporel de fonctionnement optimal au cours du temps. En d'autres termes, ce procédé est destiné à anticiper les performances réelles d'un système énergétique à construire ou à rénover et plus précisément à déterminer le design optimal de ce système énergétique en fonction dudit environnement et de données de référence construites à partir de mesures réelles.

Cette méthode est basée sur des données réelles et s'oppose à une modélisation qui permettrait de définir un design de système énergétique uniquement par des considérations mathématiques.

On comprendra que le système 1 peut être n'importe quelle infrastructure nécessitant une alimentation électrique situé sur un site géographiquement défini.

Comme illustré sur la figure 1, une ou plusieurs sources d'énergie S1, S2... Sn, alimentent le système énergétique 1 en apportant une énergie in1, in2... inn. Le système énergétique fournit un ou plusieurs services out1, out2... outk, comme par exemple le chauffage out1 d'un bâtiment P1, la production de dihydrogène out2 pour alimenter des véhicules P2, la recharge de batteries, le fonctionnement des appareils électriques d'un bâtiment, l'approvisionnement en eau, etc.

Dans un mode de réalisation, le système 1 est un système énergétique comprenant une station de production de dihydrogène, par exemple destinée à l'alimentation en dihydrogène d'une flotte de véhicules.

Alternativement aux systèmes comprenant une station de production de dihydrogène, le système énergétique 1 peut par exemple comprendre un bâtiment d'habitations, une résidence, un data center, un site industriel ou toute infrastructure immobilière susceptible de consommer et de produire de l'énergie.

Le procédé est typiquement mis en œuvre par un équipement 10 tel que représenté sur la figure 2 (par exemple un poste de travail informatique) équipé de moyens de traitement de données 11 (un processeur, un serveur distant, etc.) et de moyens de stockage de données 12 (une mémoire, en particulier un disque dur), typiquement pourvu d'une interface d'entrée et de sortie 13 pour saisir des données et restituer les résultats du procédé.

Le procédé utilise un ensemble de données relatives à des systèmes énergétiques de référence. Ces données sont des données de référence construites à partir de mesures réelles stockées dans une base de données de référence, elle-même stockée dans les moyens de stockage de données 12.

Un système énergétique de référence est défini notamment par les conversions énergétiques qui peuvent y être effectuées, et les données de référence comprennent pour un système énergétique de référence notamment les différentes grandeurs qui en caractérisent le fonctionnement et une modélisation, construite à partir de valeurs réelles mesurées, qui permet de faire le lien entre ces différentes grandeurs.

Un système énergétique de référence est notamment défini par la nature des installations de conversion énergétique qui le composent. Un système énergétique de référence est défini par une ou plusieurs sources d'énergies (réseau électrique normal, source d'énergie éolienne, solaire, hydroélectrique, marémotrice, etc.) qui en assurent l'alimentation électrique, la nature d'un ou plusieurs services fournis par le système énergétique de référence comme un chauffage par exemple produit par une pompe à chaleur, une production et un stockage de dihydrogène, une charge d'une batterie, un approvisionnement en eau du site, voire la restitution d'une partie de l'énergie électrique reçue vers le réseau électrique national.

Pour chaque installation de conversion énergétique (source d'énergie ou service fourni), les données de référence comprennent une liste des différentes grandeurs qui en caractérisent le fonctionnement.

Les grandeurs utilisées sont celles qui caractérisent le fonctionnement de l'installation de conversion et les performances que l'on souhaite optimiser. Par exemple les grandeurs utilisées pour un chauffage d'eau sanitaire peuvent comprendre la température initiale d'eau sanitaire, la température finale visée, l'efficacité énergétique du chauffage, la consommation d'eau chaude au cours du temps, le coût d'investissement, le cout de maintenance, les émissions de CO2.

Parmi les grandeurs utilisées, il est possible de distinguer :
- les « variables » qui sont des grandeurs dont la valeur dépend du cahier des charges du système énergétique à construire ou à rénover ; elles sont relatives par exemple à une ressource d'énergie primaire disponible sur le site, une puissance de chauffage à fournir, une taille ou une puissance d'une installation de conversion énergétique du système ;
- les « paramètres » qui sont des grandeurs dont la valeur ne dépend pas du cahier des charges du système énergétique à construire ou à rénover ; ils sont par exemple relatifs à la durée de vie d'un panneau photovoltaïque, un prix de revente d'électricité, un facteur de charge d'une source éolienne, une efficacité énergétique d'un chauffage etc...

Les données de référence comprennent également une modélisation de la conversion d'énergie au sein de chaque installation de conversion énergétique. La modélisation comprend des relations entre les différentes grandeurs qui caractérisent le fonctionnement de la source d'énergie ou du service fourni. La modélisation est construite à partir de données mesurées lors d'essais antérieurs. Eventuellement, la modélisation peut être construite à partir d'équations physiques.

Pour l'exemple d'une centrale solaire, les grandeurs pertinentes peuvent être l'ensoleillement, la durée de vie de l'équipement, la taille de la centrale solaire, la puissance nominale de la centrale et/ou son facteur de charge.

On entendra par facteur de charge d'une centrale électrique le rapport entre l'énergie qu'elle produit sur une période donnée et l'énergie qu'elle aurait produite durant cette période si elle avait constamment fonctionné à puissance nominale.

La modélisation de la conversion d'énergie pour une centrale solaire peut permettre de déterminer à partir d'une série temporelle d'une première grandeur telle que son ensoleillement, une série temporelle d'une deuxième grandeur telle que son facteur de charge.

Cette détermination utilise les relations entre les différentes grandeurs qui caractérisent le fonctionnement de la source d'énergie ou du service fourni. Ces relations sont notamment construites à partir de données mesurées lors d'essais antérieurs et qui peuvent être régulièrement mises à jour à partir des résultats de nouveaux essais.

Il est à noter qu'en pratique une série temporelle du facteur de charge peut être générée à partir d'une seule donnée d'ensoleillement maximal. C'est en général le cas des centrales photovoltaïques pour lesquels la puissance nominale est définie par rapport à ce seul ensoleillement maximal.

On entendra par série temporelle d'une grandeur, une suite de valeurs que prend la grandeur au cours d'une période de temps. La série temporelle est notamment caractérisée par la durée de la période de temps à laquelle elle correspond et la durée séparant deux valeurs successives. Les séries temporelles peuvent notamment représenter l'évolution horaire d'une grandeur sur une période d'une année, c'est-à-dire en utilisant une durée d'une heure entre deux valeurs successives.

Plus la durée séparant deux valeurs successives est faible, et plus l'évolution de la grandeur est représentée précisément par la série temporelle. Afin d'atteindre la finesse suffisante pour obtenir des prévisions satisfaisantes, il peut être nécessaire d'utiliser les algorithmes de traitement de données. Le traitement manuel des valeurs des grandeurs devient en effet rapidement impossible, lorsque la durée séparant deux valeurs successives est diminuée.

Il est possible pour une centrale électrique d'énergie renouvelable d'un autre type (éolien, hydroélectrique, marémoteur, etc...) de déterminer une série temporelle du facteur de charge de la centrale à partir d'un ou plusieurs paramètres pertinents (vitesse et direction du vent, pluviométrie, horaires et force des marées, etc.) définissant la ressource d'énergie renouvelable dans la centrale et d'autres données pertinentes comme l'ancienneté, la durée de vie de l'équipement ou la taille de la centrale.

Si les paramètres d'ancienneté, de durée de vie et de taille sont facilement accessibles, il peut être nécessaire pour les autres paramètres pertinents cités de procéder à des campagnes de mesure réalisées ponctuellement sur site au cours d'une période type. Ces mesures sont ensuite utilisées comme données d'entrée de la modélisation. Ces campagnes de mesures peuvent notamment être utiles pour la modélisation du chauffage, de l'éclairage, ou les données météos (température, humidité, ensoleillement) ou encore des données de demande énergétique (consommation électrique, consommation de gaz).

Parmi les modélisations connues de la personne du métier, il existe la modélisation de source d'énergie solaire GSEE (abréviation des termes anglais « *Global Solar Energy Estimator* » qui signifient « Estimateur Global d'énergie solaire ») créée par Stefan Pfenninger et la modélisation de source d'énergie éolienne VWF (abréviation des termes anglais « *Virtual Wind Farm* » qui signifient « Ferme éolienne virtuelle ») créée par lain Staffel.

Le relevé de mesures d'ensoleillement ou de ressource éolienne sur site au cours d'une période d'une année, utilisé comme données d'entrée de ces modélisations, peut permettre de générer un profil sur l'ensemble d'une année à venir du facteur de charge d'une centrale solaire ou éolienne qui serait installée sur site. Il est également possible d'utiliser le relevé de mesures d'ensoleillement ou de ressource éolienne sur site au cours d'une période de deux mois.

Les données de référence comprennent, pour chaque service fourni, une modélisation de la conversion d'énergie au cours de la production du service.

Par exemple, dans le cas de la production de dihydrogène, les données de référence peuvent comprendre une description mathématique de la transformation d'énergie électrique en quantité de dihydrogène et la dépendance de cette transformation en fonction d'un ou plusieurs facteurs pertinents comme l'âge d'un électrolyseur utilisé à cet effet et/ou la température de l'eau utilisée comme réactif de la réaction chimique.

Il est ainsi possible de déterminer à partir d'une série temporelle d'alimentation électrique d'un électrolyseur la série temporelle de la production de dihydrogène correspondante.

Dans le cas de la production de chauffage par pompe à chaleur, les données de référence peuvent comprendre une modélisation de la transformation d'énergie électrique en chaleur et la dépendance de cette transformation en fonction d'un ou plusieurs facteurs pertinents comme la température de l'air, d'autres données climatiques, l'âge de la pompe et/ou son efficacité énergétique.

Il est ainsi possible de déterminer à partir d'une série temporelle d'alimentation électrique de la pompe à chaleur la série temporelle de la production de chaleur correspondante.

La modélisation de la conversion d'énergie peut également comprendre une liste des grandeurs caractérisant le fonctionnement global de la conversion d'énergie selon un aspect économique ou environnemental et énergétique. Ces grandeurs peuvent notamment être utilisées pour mesurer la performance de la conversion d'énergie.

Une grandeur de ce type peut être désignée comme un indicateur de performance.

En particulier les grandeurs suivantes peuvent être de tels indicateurs de performance :
- indicateurs économiques :
   ∘ les coûts d'investissement qui se déclinent en coûts fixes - c'est-à-dire des coûts d'investissement indépendants de la taille du système - et en coûts variables - c'est-à-dire des coûts d'investissement proportionnels à la taille du système.
   La taille du système est définie comme la puissance installée i.e. la capacité,
   ∘ les coûts opérationnels qui sont les coûts d'exploitation et se déclinent en deux parties : les coûts liés à la consommation d'énergie, proportionnels à l'énergie consommée et au tarif d'achat, et les coûts de maintenance nécessaire au maintien du système en bon état de fonctionnement. Ces derniers sont proportionnels au nombre d'heures d'utilisation du système.
- indicateurs environnementaux et énergétiques :
   ∘ facteurs d'impact comme
      ▪ les émissions de CO2 qui sont calculés en kg de CO2 équivalents et comprennent l'intégralité des gaz à effet de serre émis par le système lors de la conversion énergétique. Ils sont donc dépendants de la source d'énergie primaire utilisée et sont proportionnels à la quantité d'énergie primaire fossile consommée,
      ▪ l'utilisation d'énergie primaire c'est à dire l'utilisation d'énergie disponible dans l'environnement sans transformation. Elle peut être d'origine fossile ou renouvelable,
   ∘ la demande énergétique (ou énergie utile) qui doit par définition être satisfaite en tout temps dans le système sous forme électrique, thermique, ou de consommation en dihydrogène ; c'est elle qui conditionne les résultats de l'optimisation (taille des installations).
   ∘ l'offre énergétique qui constitue le surplus énergétique non consommé et non stocké par les installations, à disposition de tiers via le réseau.

A partir des grandeurs décrivant le fonctionnement de la conversion d'énergie, la modélisation peut permettre d'évaluer ces grandeurs ou indicateurs économiques, environnementales et énergétiques.

La modélisation d'une conversion d'énergie en rapport avec une source d'énergie peut permettre, à partir d'une série temporelle d'une grandeur mesurée localement caractérisant une ressource d'énergie primaire disponible sur site, de déterminer des séries temporelles représentant l'évolution au cours du temps de la production d'électricité, d'un coût économique de cette électricité et d'un coût environnemental de cette électricité.

Il en est de même pour la modélisation d'une conversion d'énergie en rapport avec un service fourni : à partir d'une série temporelle d'une alimentation électrique d'une installation de conversion assurant le service il est possible de déterminer des séries temporelles représentant l'évolution au cours du temps de la production du service, du coût économique de ce service et du coût environnemental de ce service.

Le fonctionnement de chaque système énergétique de référence est défini par un modèle comprenant les modélisations de la conversion d'énergie de ses sources d'énergie et des services qu'elle produit.

Le modèle permet de calculer un indicateur de performance du système énergétique de référence, comme par exemple une grandeur économique, environnementale ou énergétique en fonction d'une valeur d'un paramètre caractérisant une source d'énergie ou un service fourni. D'autres grandeurs peuvent être utilisées comme indicateur de performance.

### Procédé

Le présent procédé est comme expliqué un procédé de caractérisation d'un système énergétique destiné à fonctionner dans un environnement donné.

L'objectif de ce procédé est de comparer les performances de différents designs de système énergétique, le cas échéant à diverses périodes de l'année, de sorte à déterminer le design optimal dans ledit environnement donné.

La performance d'un design de système énergétique suppose pour un choix particulier d'installations de conversion qui composent le système, de déterminer un dimensionnement ou une puissance maximale développée dans chacune de ces installations, et d'établir pour chacune d'entre elles un profil temporel de fonctionnement optimal au cours du temps.

L'environnement est défini d'une part par les apports possibles en électricité que le système énergétique consomme et d'autre part par un ou plusieurs besoins en service à satisfaire et que le système énergétique fournit. L'environnement comprend une ou plusieurs sources d'énergie renouvelables ainsi que le réseau électrique national.

L'environnement comprend également les structures et équipements qui sont alimentés par la production du système énergétique. Par exemple, l'environnement peut comprendre un bâtiment dont le chauffage est assuré par le système énergétique ou une flotte de véhicules qui sont alimentés en dihydrogène par le système énergétique.

Dans une première étape (a), les moyens de traitement de données 11 de l'équipement 10 reçoivent au moins une valeur d'une grandeur de consommation caractérisant un apport énergétique dudit environnement au système énergétique, et une valeur d'au moins une grandeur de production caractérisant un service fourni par le système énergétique ; un ensemble de données relatives à des installations électrique de référence étant stocké dans une base de données de référence stockée dans des moyens de stockage de données 22, chaque système énergétique de référence étant défini par un modèle permettant de calculer un indicateur de performance du système énergétique de référence en fonction des valeurs reçues de l'au moins une grandeur de consommation et de l'au moins une grandeur de production.

On utilise ici une convention pour nommer les flux d'énergie centrée sur le système énergétique. Les flux d'énergie entrant dans le système sont qualifiés de « consommation » (sous-entendu par le système) et les flux d'énergie sortant du système sont qualifiés de « production » (sous-entendu par le système).

Le procédé utilise deux types de paramètres : d'une part les paramètres de consommation caractérisant l'énergie apportée par l'environnement au système énergétique et consommée par le système énergétique et d'autre part les paramètres de production caractérisant un service fourni par le système énergétique à disposition de l'environnement. Une grandeur de consommation peut être par exemple en rapport avec l'alimentation possible en électricité générée par une centrale solaire. Une grandeur de production peut être par exemple en rapport avec le chauffage d'un bâtiment, la production de dihydrogène destiné à l'alimentation d'une flotte de véhicules, etc.

La grandeur de consommation est typiquement une grandeur qui caractérise le fonctionnement d'une source d'énergie. Par exemple la grandeur de consommation est une mesure locale d'ensoleillement caractérisant une source d'énergie solaire. Comme présenté précédemment, une telle grandeur utilisée au sein du modèle du système peut permettre de déterminer la production d'électricité de la source et un coût économique et environnemental.

La grandeur de production est typiquement une grandeur qui caractérise la production d'un service par le système énergétique de référence. La grandeur de production est une donnée fournie par l'opérateur en fonction du cahier des charges que doit remplir le système énergétique. Il peut s'agir par exemple d'un besoin en chauffage pour approvisionner un bâtiment ou d'un besoin en dihydrogène pour alimenter une flotte de véhicules.

Le système énergétique que l'on cherche à concevoir et dimensionner doit pouvoir produire le ou les services identifiés en s'alimentant en énergie dans son environnement.

Pour retenir une conception du système énergétique, un ou plusieurs paramètres de performance peuvent être utilisés.

Cet indicateur de performance peut notamment être une des grandeurs économiques, environnementales ou énergétiques telles qu'on a pu les définir précédemment. Il est également possible de définir un indicateur de performance à partir d'une combinaison de ces différentes grandeurs.

Dans une étape (b), pour chaque système énergétique de référence, il est déterminé une série temporelle représentant l'évolution sur un intervalle de temps d'une grandeur intermédiaire caractérisant une consommation ou une production du système énergétique de référence en fonction d'une des valeurs reçues et dudit modèle associé au système énergétique de référence.

Cette étape correspond à une reconstruction de données au cours de laquelle est identifié un profil de disponibilité d'une ressource, c'est à dire d'une consommation d'une énergie primaire ou un profil de besoin en énergie utile c'est-à-dire une production d'un service. Le profil est une série temporelle sur un intervalle de temps donné, comme par exemple une année. Le profil sur un cycle annuel est avantageusement donné avec la résolution temporelle la plus fine possible.

Les valeurs de la grandeur de consommation et/ou de la grandeur de production sont fournies initialement pour caractériser l'environnement. Ces valeurs peuvent dépendre de la nature de l'équipement concerné et des données qui sont effectivement accessibles à l'opérateur. Ces valeurs peuvent être issues de mesures ponctuelles sur site ou de factures. Ces valeurs peuvent caractériser une consommation ou une production mais sans contenir par exemple toute l'information de sa variabilité au cours d'une semaine, d'une saison ou d'une année.

En particulier une facture de consommation électrique, et d'une manière générale le « monitoring » classique de consommations énergétiques ne présente pas une résolution temporelle suffisamment fine pour donner des résultats satisfaisants.

Les factures présentent classiquement des bilans de consommation sur des périodes longues (mois, trimestre, année) et ne permettent pas d'atteindre une résolution temporelle suffisante sans traitement supplémentaire. Elles peuvent comprendre la différenciation heures pleines/heures creuses et les puissances atteintes. Il est néanmoins nécessaire de recourir à la reconstruction d'un profil temporel intermédiaire plus précis afin de prendre en compte de manière plus fine ces informations.

Comme précédemment évoqué, il est aussi possible de recourir à des campagnes de mesure sur site et/ou à des méthodes de reconstructions de profil. Une telle surveillance ou monitoring peut se faire avec une résolution temporelle très fine. Des campagnes de mesures peuvent être réalisées de manière ponctuelle et concernent des périodes relativement courtes de la journée au mois, car elles sont chronophages et onéreuses.

L'établissement, à partir de la valeur de la grandeur de consommation ou de production fournie, d'une série temporelle d'une grandeur intermédiaire est indispensable pour affiner la caractérisation du système énergétique, notamment en précisant la variabilité de la consommation ou de la production concernée.

L'optimisation du système énergétique sur la base d'au moins une série temporelle permet d'atteindre une finesse suffisante dans la caractérisation d'un indicateur de performance comme par exemple le coût économique et/ou environnemental du système énergétique.

En particulier, une grande finesse temporelle est nécessaire pour dimensionner correctement les installations de conversion énergétique d'origine renouvelable à caractère très intermittent, le dimensionnement des équipements de stockage associés, ainsi que pour connaître précisément les tarifs d'achat et de vente ainsi que la qualité du mix énergétique du réseau électrique.

La connaissance précise du profil temporel de la demande énergétique d'un site particulier permet de dimensionner plus finement les installations de conversion énergétique d'origine renouvelable.

Dans le cas d'une installation photovoltaïque, un profil temporel horaire de la consommation permet de spécifier les différences de consommations jour/nuit et les pics de puissance (par exemple matin, midi et soir). Il est alors possible d'optimiser l'installation photovoltaïque et en particulier la part d'autoconsommation, la réinjection sur le réseau ou l'autonomie. Une résolution temporelle horaire permet également de prendre en compte la variabilité des prix de l'électricité sur le marché de gros et les facteurs d'émissions associés au réseau. Cela permet d'être plus précis dans le design des installations et lors du calcul des indicateurs de performance. La détermination de la série temporelle de la grandeur intermédiaire à partir des valeurs fournies peut être effectuée en utilisant le modèle du système énergétique de référence.

Par exemple, les paramètres de consommation du système énergétique de référence qui concernent donc l'énergie électrique acheminée au système énergétique et consommée par elle peuvent être des données climatiques relatives au site du système de type ensoleillement ou irradiation solaire, température, direction et vitesse du vent. De telles données peuvent notamment se fonder sur la base de mesures réelles comme des données d'observations par satellite (par exemple MERRA-2). Les historiques de mesures réelles permettent d'identifier un profil type qui peut être utilisé pour modéliser une situation future. Ces données historiques réelles sont classiquement disponibles à une résolution temporelle fine et peuvent être traitées pour être représentatives d'une année type.

Un traitement de ces données peut être nécessaire pour estimer une grandeur intermédiaire de consommation sous la forme d'un profil au cours du temps sur une durée d'un an d'une grandeur physique du site qui serait l'irradiation solaire, la direction et la force du vent, les horaires et force des marées.

Ce traitement de données peut notamment comporter des opérations de moyennes horaires sur des mesures relevées sur plusieurs années, des opérations de régression linéaire.

Une fois la grandeur intermédiaire de consommation déterminé, il est possible de générer en utilisant le modèle du système électrique de référence des profils temporels de facteur de charge, comme il a été évoqué précédemment.

Dans un autre exemple, une valeur fournie d'une grandeur de production concernant une production de dihydrogène pour l'alimentation d'une flotte de véhicules peut comprendre différents paramètres selon que la flotte soit captive ou non.

Si la flotte est captive, alors la valeur fournie peut être un nombre de véhicules et une nature de ces véhicules (utilitaire, lourd, navetteur, etc...).

Le modèle du système énergétique de référence est adapté pour pouvoir mettre en rapport la production et le stockage de dihydrogène avec la demande en dihydrogène que suppose la flotte de véhicules.

Dans ce cas particulier, le modèle comprend une modélisation de la flotte pour effectuer une estimation temporelle de la demande en dihydrogène à partir du nombre de véhicules de la flotte et de leur nature.

Il est possible, en utilisant des données statistiques sur les usages et kilométrages moyens en France concernant les navettes, véhicules utilitaires et véhicules lourds, les données techniques disponibles sur les véhicules (mesurées par les fournisseurs ou évaluées à partir de l'état de l'art connu) concernant l'autonomie, le réservoir et la consommation d'établir des probabilités de recharge au cours du temps à partir notamment d'estimation de l'état du réservoir et d'une distribution des horaires de déplacement. Compte-tenu de ces informations, la simulation de trajets pour la flotte de véhicules souhaitée permet de générer un profil de recharge au cours du temps à la station de dihydrogène.

Le modèle du système énergétique permet alors, à partir d'une donnée générale de dimension d'une flotte de véhicules fonctionnant au dihydrogène, de déduire un profil temporel de besoin en dihydrogène. Par exemple le profil temporel peut être un profil horaire du besoin en dihydrogène sur un intervalle d'un an. Le besoin en dihydrogène constitue dans ce cas la grandeur intermédiaire mentionnée précédemment.

Si la flotte n'est pas captive, alors la valeur fournie d'une grandeur de production concernant une production de dihydrogène peut être la taille d'une agglomération proche du système énergétique ou une taille d'une zone urbaine à laquelle appartient le système énergétique, la taille d'une ou plusieurs flottes de véhicules associés à un service collectif (enlèvement de déchets, transports public, services postaux) dans cette agglomération ou dans cette zone.

Le modèle du système énergétique de référence est adapté pour pouvoir estimer les caractéristiques d'une flotte non captive susceptible d'être rechargée auprès du système énergétique.

Dans ce cas particulier, le modèle comprend une modélisation du nombre et de la nature de véhicules composant une telle flotte à partir de la taille de l'agglomération de la zone, ou de la taille d'une flotte de véhicules associés à un service collectif.

Il est notamment possible, en utilisant des mesures statistiques sur les usages dans les agglomérations concernant le trafic, d'établir des probabilités de conversion du parc automobile du thermique vers le dihydrogène.

Une fois la flotte estimée, il est possible comme précédemment de déduire un profil temporel de besoin en dihydrogène.

Le besoin en dihydrogène obtenu ou demande énergétique obtenue par le modèle peut alors être utilisé comme une donnée d'entrée d'une modélisation d'une installation de conversion énergétique utilisant du dihydrogène et plus globalement du problème d'optimisation.

Il est à noter que le besoin en dihydrogène est déterminé de manière indépendante à la modélisation de l'électrolyseur. Le besoin en dihydrogène peut être utilisé pour dimensionner un électrolyseur ou une autre technologie de production.

Dans un autre exemple, une valeur fournie d'une grandeur de production concernant l'alimentation électrique et le chauffage d'un bâtiment sur le site du système énergétique, peut consister en des mesures ponctuelles sur site (à l'échelle d'une journée, semaine, ou d'un mois), et/ou des factures mensuelles.

De telles factures ou des campagnes de mesure ne permettent en général pas d'avoir une résolution temporelle fine sur une année entière, les premières parce qu'elles ont une résolution trop grossière, les secondes parce qu'elles sont en général trop chronophages et onéreuses pour être réalisées sur une année entière. Cependant les unes comme les autres peuvent servir de point de départ pour la génération du profil intermédiaire comme le profil de charge moyen d'un bâtiment. La reconstruction de courbes permet d'obtenir une précision suffisante et/ou supplémentaire tout en s'affranchissant de techniques de mesures qui peuvent être chronophages et onéreuses. Au-delà du gain en précision pour l'analyse, cela comporte aussi en pratique des avantages matériels et économiques.

La série temporelle horaire du profil de charge moyen du bâtiment pour une année entière peut être modélisée en se fondant sur des mesures réalisées sur le système et des mesures de paramètres externes (température, horaires d'ouverture, normes en vigueur, ...). Les paramètres externes pertinents peuvent être préalablement identifiés par régression. La grandeur intermédiaire représente la demande énergétique du système et sert dans ce cas-ci à améliorer la caractérisation de l'existant, prédire son comportement et améliorer la précision de l'analyse.

A partir de ces valeurs, il est donc généré, dans une première étape, un profil de charge moyen du bâtiment (avec une fréquence horaire par exemple), c'est-à-dire de son alimentation électrique nécessaire, ou bien un profil de chaleur nécessaire.

Dans une deuxième étape il est possible de lister une pluralité de grandeurs qui peuvent influer sur la charge moyenne du bâtiment ou le profil de chaleur nécessaire en rapport avec les usages moyens (horaires, périodes de vacances) les normes en vigueur, les appareils classiquement présents dans un type de bâtiment, les conditions climatiques (irradiation, luminosité, température).

Une troisième étape consiste à réaliser une régression linéaire multiple du profil de charge moyen ou du profil de chaleur nécessaire en utilisant la pluralité de grandeurs identifiées.

De cette manière des coefficients pondérant l'influence de chaque grandeur sur le profil de charge moyen ou le profil de chaleur nécessaire sont déterminés.

Il est ainsi possible ensuite de réaliser des prédictions du profil de charge moyen ou du profil de chaleur nécessaire pour l'année à venir. En utilisant les valeurs des grandeurs attendues pour l'année à venir et les coefficients de régression obtenus, on calcule un profil de charge moyen ou un profil de chaleur nécessaire. Ce profil de charge moyen ou profil de chaleur nécessaire constitue dans ce cas le profil de la grandeur intermédiaire mentionnée précédemment.

Dans une étape (c), pour chaque système énergétique de référence, l'indicateur de performance est optimisé en fonction des valeurs reçues, dudit modèle associé au système énergétique de référence et de la série temporelle représentant l'évolution sur un intervalle de temps de la grandeur intermédiaire.

L'optimisation de l'indicateur de performance, une fois la série temporelle représentant l'évolution de la grandeur intermédiaire déterminée, passe par la détermination d'un point de fonctionnement optimal du système énergétique de référence.

Un point de fonctionnement est défini par un ensemble de valeurs prises par les grandeurs caractérisant le fonctionnement du système énergétique. Un point de fonctionnement peut aussi être défini par un ensemble de séries temporelles suivies par ces variables.

Il s'agit en particulier d'optimiser le fonctionnement simultané des installations, en optimisant à chaque pas de temps la répartition des charges (c'est-à-dire la puissance) de chaque équipement assurant une conversion énergétique.

Le point de fonctionnement optimal peut être trouvé d'une part si la valeur de la grandeur de production est atteinte (c'est-à-dire que le besoin identifié est rempli par le système énergétique) et d'autre part si la valeur de l'indicateur de performance est optimale.

Le calcul d'un indicateur de performance (par exemple la consommation énergétique) du système énergétique peut correspondre à la somme, sur l'intervalle de temps considéré, de la consommation énergétique des différentes installations de conversion énergétique appartenant au système énergétique. L'objectif est d'obtenir des installations de conversion énergétique qui satisfont les contraintes de demandes énergétiques qui peuvent être calculées lors de l'étape (b) dit de reconstruction de données et qui permet d'affiner la résolution temporelle du problème à résoudre.

Parmi les variables caractérisant le système énergétique, il est possible d'ajuster le mix énergétique c'est-à-dire la répartition selon les différentes sources d'énergie de la consommation du système énergétique de référence. En particulier ce mix énergétique peut être choisi variable au cours du temps. Le mix énergétique est alors défini par les séries temporelles de l'énergie électrique apportée au cours du temps au système énergétique par les différentes sources d'énergie.

L'ajustement du mix énergétique comprend notamment le dimensionnement des équipements produisant de l'électricité à partir d'une énergie renouvelable et la quantité de stockage au cours du temps.

De plus, si le service fourni par le système énergétique de référence peut être emmagasiné avant d'être fourni à l'environnement, il est possible d'ajuster la production du service au cours du temps. Par exemple, dans le cas d'une production de dihydrogène pour alimenter une flotte de véhicule, la station de production de dihydrogène peut comprendre un volume de stockage du dihydrogène. Le dihydrogène produit est stocké avant d'être distribué à un véhicule.

La quantité de dihydrogène stockée dans le système énergétique devient alors une grandeur à prendre en compte dans l'optimisation. En particulier, on pourra générer une série temporelle de la quantité de dihydrogène stockée au cours du temps. De cette série temporelle, il est possible d'extraire le volume maximal stocké à un moment donné et donc une possible contrainte à prendre en compte pour optimiser le système énergétique.

De même si le système énergétique comprend un système de batteries électriques, il est possible d'ajuster au cours du temps la charge des batteries et l'alimentation d'un équipement, par exemple de chauffage, par ces mêmes batteries.

L'optimisation peut être menée en effectuant une optimisation linéaire en nombres entiers, également désignée sous l'appellation MILP (abréviation du terme anglais « *Mixed-integer linear programming* ») connue de la personne du métier.

Les séries temporelles de production sont normalement fixées au début de la phase d'optimisation, en particulier celles qui caractérisent le service à fournir par le système. Dans le cas cependant d'une production qui peut être stockée pour consommation ultérieure, comme par exemple le dihydrogène, la série temporelle de quantité de dihydrogène produite et la série temporelle de quantité stockée peut néanmoins être ajustée au cours de l'optimisation.

Il est donc possible d'ajuster le mix énergétique c'est-à-dire la répartition selon les différentes sources d'énergie de la consommation du système énergétique de référence ainsi que certaines séries temporelles de production et de stockage.

Cet ajustement peut se fonder sur l'optimisation (maximisation, minimisation ou stabilisation) d'un indicateur de performance.

L'optimisation peut consister à minimiser le coût économique total du système énergétique de référence (coût d'investissement et coût de fonctionnement), tout en respectant un certain nombre de contraintes. Les contraintes particulières à respecter peuvent être un encombrement ou une prise au sol à ne pas dépasser, un coût maximal environnemental à ne pas excéder.

Le procédé comprend une étape (d) de détermination du système énergétique de référence optimale dans ledit environnement donné en fonction des paramètres de performance calculés pour chaque système énergétique de référence.

Par système énergétique optimal, on entend un système énergétique de référence pour lequel un point de fonctionnement a été identifié pour lequel d'une part le cahier des charges correspondant à la grandeur de production est satisfait et d'autre part l'indicateur de performance est optimal par rapport aux systèmes énergétiques de référence.

Cela peut par exemple se faire en comparant directement les paramètres de performance calculés (par exemple, si l'indicateur de performance est le cout économique annuel ou le cout environnemental annuel, plus ce paramètre baisse et meilleure est la performance du système).

Les caractéristiques associées au système énergétique de référence déterminé comme optimal sont finalement restituées sur l'interface 23 dans une étape (e).

A l'issue de l'étape (d) de détermination du système énergétique de référence optimale, une pluralité de séries temporelles synchronisées représentant l'évolution sur l'intervalle de temps d'une consommation électrique et d'une production du système énergétique de référence peut être déterminée.

L'optimisation peut consister notamment à optimiser un mix énergétique variable au cours du temps. Un tel mix énergétique peut être défini, pour chaque source d'énergie, par la consommation au cours du temps par le système énergétique de l'énergie électrique en provenance de cette source.

Un tel mix énergétique caractérise la consommation électrique du système énergétique de référence.

L'optimisation peut également consister à déterminer pour chaque service fourni une série temporelle représentant l'évolution sur un intervalle de temps de la production du service, par exemple une série temporelle représentant l'évolution sur l'intervalle de temps d'une production de chaleur, ou une série temporelle représentant l'évolution sur l'intervalle de temps d'une production de dihydrogène ou encore une série temporelle représentant l'évolution sur l'intervalle de temps d'un stockage de dihydrogène.

De tels profils caractérisent la production du système énergétique de référence.

L'ensemble de ces profils constitue une pluralité de séries temporelles synchronisées.

En option, il est possible de réaliser pour un système énergétique de référence une analyse de sensibilité. Il s'agit d'effectuer plusieurs optimisations successives du système énergétique en modifiant une contrainte dans l'optimisation. Si le point de fonctionnement optimal est fortement modifié d'une optimisation à la suivante alors que la contrainte a, elle, été peu modifiée, le système énergétique montre une sensibilité à la contrainte. Ceci a un intérêt particulier lorsque l'on cherche à connaître la sensibilité du système énergétique proposée à des variations économiques (hausse/baisse des tarifs de l'énergie par exemple). Des systèmes énergétiques de référence « moins » optimaux par rapport au système énergétique de référence optimal peuvent être identifiés comme étant plus robustes à des variations économiques et *in fine* plus réalistes à mettre en place.

### Equipement et ensemble

Selon un deuxième aspect, est proposé l'équipement 10 pour la mise en œuvre du présent procédé de caractérisation d'un système énergétique 1 destiné à fonctionner dans un environnement donné.

Cet équipement 10 comprend comme expliqué des moyens de traitement de données 11, des moyens de stockage de données 12, et une interface 13.

En particulier, les moyens de stockage de données 12 stockent dans une base de données de référence un ensemble de données relatives à des systèmes énergétiques de référence, chaque système énergétique de référence étant défini par un modèle permettant de calculer un indicateur de performance du système énergétique de référence en fonction d'au moins une grandeur de consommation et une grandeur de production,

Et les moyens de traitement de données 11 sont configurés pour mettre en œuvre :
∘ un module de réception depuis l'interface 13 d'une valeur d'au moins une grandeur de consommation caractérisant un apport énergétique dudit environnement au système énergétique, et d'une valeur d'au moins une grandeur de production caractérisant un service fourni par le système énergétique ;
∘ un module de détermination, pour chaque système énergétique de référence, d'une série temporelle représentant l'évolution sur un intervalle de temps d'une grandeur intermédiaire caractérisant une consommation ou une production du système énergétique de référence en fonction d'une des valeurs reçues et dudit modèle associé au système énergétique de référence;
∘ un module d'optimisation, pour chaque système énergétique de référence, d'un indicateur de performance en fonction des valeurs reçues, dudit modèle associé au système énergétique de référence et de la série temporelle représentant l'évolution sur un intervalle de temps de la grandeur intermédiaire ;
∘ un module de détermination du système énergétique de référence optimal dans ledit environnement donné en fonction des paramètres de performance calculés pour chaque système énergétique de référence ;
∘ un module de restitution sur l'interface 23 de caractéristiques associées audit système énergétique de référence déterminé comme optimal.

## Revendications

1. Procédé de caractérisation d'un système énergétique (1) alimenté par au moins une source d'énergie renouvelable et destiné à fonctionner dans un environnement donné comprenant la mise en œuvre par des moyens de traitement de données (11) d'étapes de :
(a) réception d'une valeur d'au moins une grandeur de consommation caractérisant un apport énergétique dudit environnement au système énergétique, et d'une valeur d'au moins une grandeur de production caractérisant un service fourni par le système énergétique ; un ensemble de données relatives à des systèmes énergétiques de référence étant stocké dans une base de données de référence stockée dans des moyens de stockage de données (12), chaque système énergétique de référence étant défini par un modèle permettant de calculer un indicateur de performance du système énergétique de référence en fonction des valeurs reçues de l'au moins une grandeur de consommation et de l'au moins une grandeur de production ;
(b) pour chaque système énergétique de référence, détermination d'une série temporelle représentant l'évolution sur un intervalle de temps d'une grandeur intermédiaire caractérisant une consommation ou une production du système énergétique de référence en fonction d'une des valeurs reçues et dudit modèle associé au système énergétique de référence ;
(c) pour chaque système énergétique de référence, optimisation d'un indicateur de performance en fonction des valeurs reçues, dudit modèle associé au système énergétique de référence et de la série temporelle représentant l'évolution sur un intervalle de temps de la grandeur intermédiaire;
(d) détermination du système énergétique de référence optimal dans ledit environnement donné en fonction des indicateurs de performance optimisés pour chaque système énergétique de référence ; et
(e) restitution sur une interface (13) de caractéristiques associées au système énergétique de référence déterminé comme optimal, le système énergétique comprenant une station de production de dihydrogène, les caractéristiques associées au système énergétique de référence déterminé comme optimal comprenant une série temporelle représentant l'évolution sur l'intervalle de temps de la production de dihydrogène et une série temporelle représentant l'évolution sur l'intervalle de temps du stockage de dihydrogène.

2. Procédé de caractérisation selon la revendication 1 dans lequel chaque série temporelle représente une évolution horaire sur un intervalle d'une année.

3. Procédé de caractérisation selon l'une des revendication 1 à 2 dans lequel le calcul de l'indicateur de performance comprend la détermination d'une pluralité de séries temporelles synchronisées représentant l'évolution sur l'intervalle de temps d'une consommation électrique et d'une production du système énergétique de référence.

4. Procédé de caractérisation selon l'une des revendication 1 à 3 dans lequel l'indicateur de performance est choisi parmi l'un au moins des indicateurs suivants : un coût économique du système énergétique, une quantité annuelle de gaz à effet de serre émis par le système énergétique, une consommation d'énergie primaire par le système énergétique.

5. Procédé de caractérisation selon la revendication 1 dans lequel le système fournit un service de distribution de dihydrogène à une flotte de véhicules, le modèle du système énergétique de référence déterminé comme optimal permettant de déterminer la série temporelle représentant l'évolution sur l'intervalle de temps de la production de dihydrogène et une série temporelle représentant l'évolution sur l'intervalle de temps du stockage de dihydrogène à partir d'un nombre de véhicules et d'une nature des véhicules ou à partir d'une taille d'une agglomération proche du système énergétique, d'une taille d'une zone urbaine à laquelle appartient le système énergétique ou d'une taille d'une flotte de véhicules associés à un service collectif dans l'agglomération ou dans la zone.

6. Equipement (10) pour la caractérisation d'un système énergétique (1) alimenté par au moins une source d'énergie renouvelable et destiné à fonctionner dans un environnement donné comprenant :
- une interface (13) ; et
- des moyens de traitement de données (11) comprenant :
un module de réception depuis l'interface d'une valeur d'au moins une grandeur de consommation caractérisant un apport énergétique dudit environnement au système énergétique, et d'une valeur d'au moins une grandeur de production caractérisant un service fourni par le système énergétique ; un ensemble de données relatives à des systèmes énergétiques de référence étant stocké dans une base de données de référence stockée dans des moyens de stockage de données (12), chaque système énergétique de référence étant défini par un modèle permettant de calculer un indicateur de performance du système énergétique de référence en fonction d'au moins une des valeurs reçues
un module de calcul dudit indicateur de performance en fonction des valeurs reçues et dudit modèle associé au système énergétique de référence, le calcul comprenant la détermination d'une série temporelle représentant l'évolution sur un intervalle de temps d'une grandeur intermédiaire caractérisant une consommation ou une production du système énergétique de référence en fonction d'une des valeurs reçues et dudit modèle associé au système énergétique de référence ;
un module de détermination du système énergétique de référence optimal dans ledit environnement donné en fonction des indicateurs de performance calculés pour chaque système énergétique de référence ; et
un module de restitution sur une interface de caractéristiques associées audit système énergétique de référence déterminé comme optimal.
